# EUROPEAN PATENT APPLICATION

(11) **EP 3 552 790 A1**
(43) Date of publication of application: **16.10.2019**
(21) Application number: 19160002.2
(22) Date of filing: 28.02.2019
(51) Int. Cl.: B29C 33/76, B29C 70/22, B29C 70/32, B29C 33/30, B29C 70/54, E04C 5/07, B29L 31/06

(54) **A METHOD AND A DEVICE FOR THE PRODUCTION OF FORMED PARTS FROM COMPOSITE FIBRES RODS**

(30) Priority: 29.03.2018 PL 42506918
(71) Applicant: Polus, Marian, 31-215 Kraków (PL)
(72) Inventor: POLUS, Marian, 31-215 Kraków (PL); PIECZKA, Piotr, 43-229 wiklice (PL)
(74) Representative: Malcherek, Piotr

(57) **Abstract**

The invention relates to a method and a device for manufacturing formed parts from rods made of composite fibres and designed to be used especially in production of reinforcing components for civil engineering.

In a method according to the invention a rod (P) section is bent by spiral coiling of it onto a rotating core (9) until the desired number of coils (P') is achieved and subsequently the formed coils (P') are hardened and after hardening are finally cut along at least one cutting line (14) which extends in parallel to the rotation axis (O) of the core (9), which makes it possible to obtain many parts of similar shape.

A device (1) according to the invention has a rotating disc (5) with holes (5") in a face surface (5') for receiving fitting pins (9a) arranged on the core (9), which serves for coiling a rod (P) made of composite fibres. The core (9) can have a form of a flat frame (10) or for example a form of a prism with a rectangular or triangular base plate. The core (9) is equipped with rolls (11,13) with concaved grooves (11', 13') for bending the rod (P) section. The shape of the core (9) depends on the desired shape of final product, used as reinforcing components for civil engineering.

## Description

The invention relates to a method and a device for manufacturing formed parts from rods made of composite fibres and designed to be used especially in production of reinforcing components for civil engineering and for shielding meshes.

The patent description EP 2 890 550 B1 discloses a method of manufacturing reinforcing components made of plastic and designed for use as reinforcing members for concrete structures. The method assumes that final formed part is made of a composite material by repeated hardening of straight rods already cut to sections of desired length. Initially the rods are pre-cured and then they are hardened once again down in sections where bending of rods is not expected. Each rod is placed into a dedicated die that matches the shape of formed parts and then the sections which have not been pre-cured are bent by means of rolls with desired diameter and subsequently the bent sections are being hardened and after hardening the part achieves the final form.

The foregoing method for production of formed parts is extremely time-consuming since each individual rods must be subjected to several hardening phase one after another. In addition, pre-cured rods must be stored under strictly defined conditions since only some portions of these rods are hardened to allow bending of the remaining, non-cured, portions. In addition, any alteration of the final product form needs to rearrange the entire hardening treatment plant and to have the curing die replaced since bending is to be carried out at different points as compared to the preceding part.

The purpose of this invention is to develop such a method for manufacturing formed parts from rods of composite fibres, which substantially simplify the process of rod forming to the desired shape. Also the invention scope includes a devices dedicated to implementation of that method.

The essence of the device according to the presented invention consists in the fact that the device has a rotating core with a spatial frame structure for pulling and bending the rod composite fibres and the core is detachably and rigidly fixed to a face surface of a rotating disc mounted at the far end of a shaft supported on bearings and driven by means of a transmission gearbox of the driving unit, where the rolls designed for the rod bending are fixed at the vertex arms of the core and are disposed in parallel to the rotation axis of the core and the rotating disc.

For simplicity of the design it is beneficial to provide holes made in the face surface of the rotating disc and designed to insert fitting pins deployed on the core.

The simplest embodiment of the invention assumes that the core has a form of a flat frame with long arms mutually connected by means of short arms and the outermost short arms incorporate rotating rolls, where one long arm extends towards the rotating disc and has pins assigned to specific holes in the rotating disc, whilst the long arms extend along the diameter of the rotating disc.

It is beneficial when surfaces of the rotating rolls mounted to the core have concaved grooves serving as guiding facilities for the rod to be bent and coiled on the core. Such a solution enables more regular wrapping of the coils.

Another embodiment of the device according to the present invention is possible, where the core has a form of a trussed prism with a rectangular base plate, where the base extends in parallel to the face surface of the rotating disc and its vertex arms are perpendicular to the rotating disc and provided with rotating rolls whilst the pins inserted into holes of the rotating disc are deployed on arms extending in parallel to the face surface of the rotating disc.

This embodiment of the invention assumes that the core has a form of a prism with a rectangular base plate.

Alternatively, the core can be designed as a trussed prism with a triangular base plate.

To assure reliable and precise guiding of the rod to be bent and coiled onto the core it is beneficial when the rotating rolls mounted to the core have concaved grooves serving as guiding facilities for the rod to be bent and coiled.

Another beneficial embodiment of the invention also assumes that the rotating disc has holes designed to receive pins of the core which are arranged down the lines of radial direction, which makes it possible to attach cores of various shapes and scalable sizes.

The essence of the method according to the present invention consist in fact that the rod section is bent by spiral coiling of it onto a rotating core until the desired number of coils is achieved and subsequently the formed coils are hardened and after finally cut along at least one cutting line which extends in parallel to the rotation axis of the core, which makes it possible to release the formed parts form the core.

It is beneficial when rod made of composite fibres is coiled onto a core and the perimeter of the core cross-section, with reference to the rotation axis, has a shape that matches the shape of formed parts to be produced, and after hardening the formed coils are cut along the cutting lines defined by end points for formed parts.

The device according to the present invention features with high simplicity of design and is easy for operation. Application of the device enables reduction of the treatment time since a single technological operation of the rod coiling is sufficient to produce a plurality of formed parts that are subsequently split up by cutting the coil. The additional benefit is an easy change of formed parts to be manufactured, which only needs to change the core that is used to coil the rod thereon.

The key advantage of the method according to the present invention consist in the possibility to manufacture formed parts of any desired shape during a one continuous technological process combined with production of rods made up of composite fibres, in the final stage of this technological process. It eliminates the need to store non-hardened or partly hardened rods made up of composite fibres. In addition, it is possible to produce plurality of formed parts at a time, since the number of formed parts depends on the number of coils coiled onto the core and these coils can be cut to final formed parts in a very short time. Also the amount of waste material from manufacturing of formed parts from composite rods is reduced since shape and dimensions and the core can be designed accordingly for specific dimensions and shapes of final products.

The invention according to its embodiments is presented in details on the attached drawings, where:
Fig. 1 is a back perspective view of the device for manufacturing formed parts of composite rods, where the rear wall of the box-type housing is removed;
Fig. 2 is a perspective view of the device with opened doors in the front and opened side walls;
Fig. 3 is a simplified front perspective view of the rotating disc with a core attached to it and with the core which has a shape of a trussed prism with a rectangular base plate;
Fig. 4 is a front view of a core designed as a flat frame with a coils of a rod made of composite fibres is wrapped onto the core;
Fig. 5 is a front view of a core designed as a trussed prism with the rectangular base plate;
Fig. 6 is a front view of a core designed as a trussed prism with the triangular base plate;

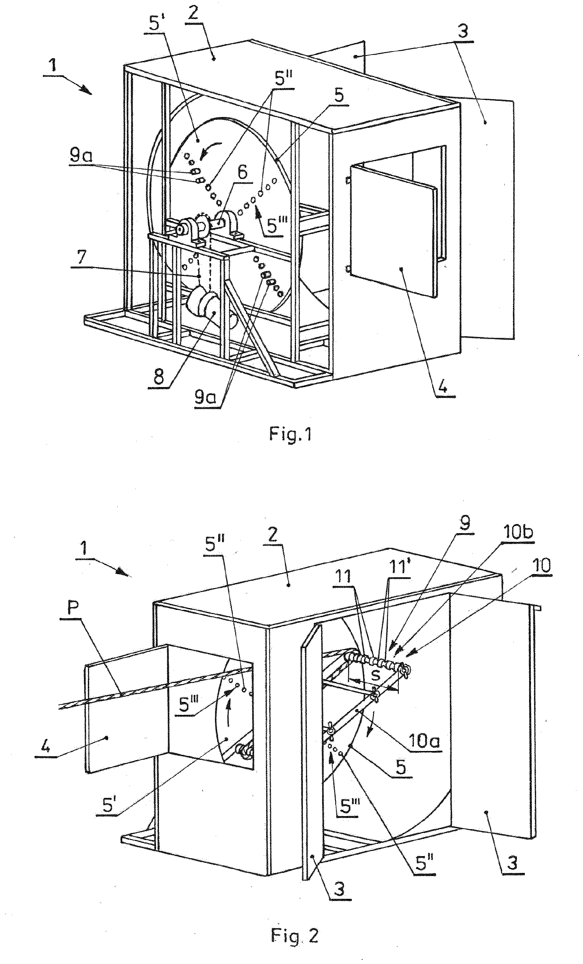

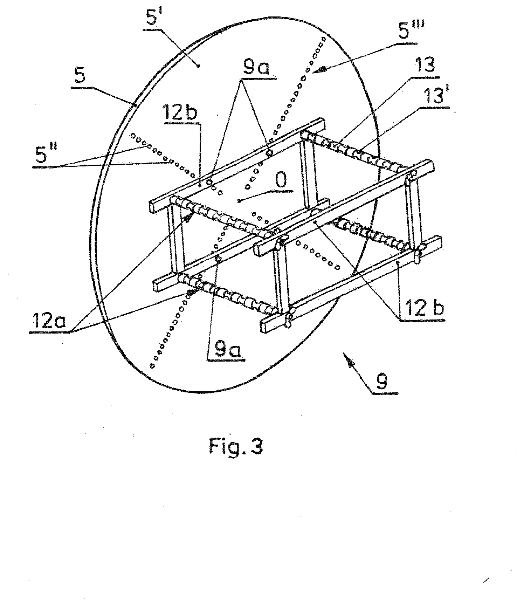

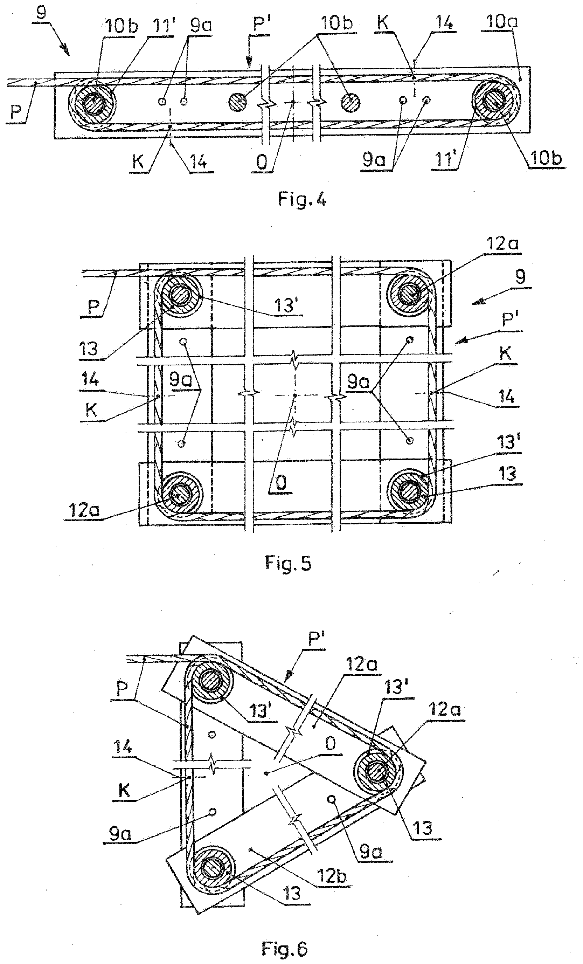

A device 1 for manufacturing formed parts of composite fibres has a housing 2 of a box design with openable doors 3 in the front wall and doors 4 in the side wall (Fig. 1, Fig. 2). The housing 2 encapsulates a disc 5 arranged vertically and mounted at the far end of the shaft 6 supported on bearings and driven by a chain transmission gearbox 7 of a driving unit 8 rigidly fixed inside the housing 2. The face surface 5' of the rotating disc 5 has holes 5" deployed down the line 5''' of the radial direction. The holes are designed to receive fitting pins 9a of the core 9 (Fig. 2) to enable a detachable connection between the disc 5 and the core 9. In this embodiment of the invention the core 9 has a form of a flat frame 10 with long arms 10a mutually connected by means of short arms 10b and the outermost short arms 10b incorporate rotating rolls 11, where one long arm 10a extends towards the rotating disc 5 and has pins 9a. The both long arms 10a extend along the diameter of the rotating disc 5. Surfaces of rotating rolls 11 have concaved grooves 11' serving as guiding facilities for the rod P to be bent and coiled onto the core 9 (Fig. 2). In a specific embodiment of the invention the core 9 can have a form of a trussed prism with a rectangular base plate (Fig. 3 and Fig. 4) and for such embodiment the vertex arms 12a arranged perpendicularly to the surface 5' of the rotating disc 5 are provided with rotating rolls 13 with concaved grooves arranged on their surfaces. For that embodiment the fitting pins 9a are deployed on arms 12b extending towards the face surface 5' of the rotating disc 5.

In another particular embodiment of the invention (Fig. 6) the core 9 can have a form of a trussed prism with a triangular base plate. If so, the rotating rolls 13 are mounted on vertex arms 12a arranged in perpendicular to the front surface 5' of the rotating disc 5 and fitting pins 9a are mounted on arms 12b extending in parallel to the front surface 5' of the disc 5.

According to the invention, a straight and non-hardened rod P made of composite fibres is introduced into the interior of the device 1 via an opened door 4 provided in the side wall. After the core 9 is detachably fixed to the rotating disc 5 by means of fitting pins 9a inserted into holes 5" the straight rod P is coiled onto the core 9 and accumulated in subsequent coils arranged down the core width s. Upon the sufficient length of the straight rod P is coiled onto the core, the rod P is cut off and the core 9 together with the coil P' wrapped around it is detached from the rotating disc 5 and transferred into a separate chamber designed for hardening (not shown on the drawings). When the hardening treatment is finished the coil P' is cut along specific cutting lines 14, extending in parallel to the rotation axis O of the coil 9. Eventually, formed parts are produced and the part shapes are defined by end points K of them. Cutting of the coil P' releases the core 9 and makes it ready for repeated coiling of the straight rod P.

Cutting the coil P', as shown in Fig. 4, down the cutting line 14 makes it possible to produce plurality of formed parts shaped as a straight section with one hooked end, where two parts of that shape are obtained from a single wrap of the coil. In turn, cutting the coil P' as shown in Fig. 5, produces two formed parts from a single coil wrap and each part is shaped as a straight section with both ends bent at the angle of 90°.

The cores 9 presented above are merely suggestive and in no way are intended to limit or exhaust the scope of the invention. For instance the core can have a shape of a prism with base plated designed as a regular or irregular polygon or even as a circle. The design of the core depends on the desired shape of formed parts manufactured of composite fibres. Both the method and the device are applicable to composite rods of various design and composition of the material with consideration to their practical application field.

## Claims

1. A device (1) for manufacturing formed parts of composite fibres, embedded into a housing (2) of a box design and with openable walls, having a drive unit (8) to pull a rod (P) during the forming operation as well as rolls (11, 13) to bend the rod, where the roll diameter corresponds to the bending radius of the rod (P), **characterized in that**, the device has a rotating core (9) with a spatial frame structure for pulling and bending the rod (P) and the core (9) is detachably and rigidly fixed to a face surface (5') of a rotating disc (5) mounted at the far end of a shaft (6) supported on bearings and driven by means of a transmission gearbox (7) of the driving unit (8), where the rolls (11,13) designed for the rod bending are fixed at the vertex arms (10b, 12a) of the core (9) and are disposed in parallel to the rotation axis (O) of the core (9) and the rotating disc (5).

2. The device according to Claim 1, **characterized in that**, the face surface (5') of the rotating disc (5) has holes (5") designed to receive fitting pins (9a) arranged on the core (9).

3. The device according to Claim 1 or 2, **characterized in that**, the core (9) has a form of a flat frame (10) with long arms (10a) mutually connected by means of short arms (10b) and the outermost short arms (10b) incorporate rotating rolls (11), where one long arm (10a) extends towards the rotating disc (5) and has pins (9a) assigned to specific holes (5") in the rotating disc (5), whilst the long arms (10a) extend along the diameter of the rotating disc (5).

4. The device according to Claim 3, **characterized in that**, surfaces of the rotating rolls (11) mounted to the core (9) have concaved grooves (11', 13') serving as guiding facilities for the rod (P) to be bent and coiled.

5. The device according to Claims 1 or 2 **characterized in that** the core (9) has a form of a trussed prism with a rectangular base plate and the base extends in parallel to the face surface (5') of the rotating disc (5) and its vertex arms (12a) are perpendicular to the rotating disc (5) and provided with rotating rolls (13) whilst the pins (9a) inserted into holes (5") of the rotating disc (5) are deployed on arms (12b) extending in parallel to the face surface (5') of the rotating disc (5).

6. The device according to Claim 5 **characterized in that** the core (9) has a form of a prism with a rectangular base plate.

7. The device according to Claim 1 or 2 **characterized in that** the core (9) has a form of a prism with a triangular base plate.

8. The device according to Claim 5, **characterized in that**, surfaces of the rotating rolls (13) mounted to the core (9) have concaved grooves (13') serving as guiding facilities for the rod (P) to be bent and coiled.

9. The device according to Claims 1 and 2, **characterized in that**, the rotating disc (5) has holes (5') designed to receive pins (9a) of the core (9) which are arranged down the lines (5''') of radial direction.

10. A method of producing formed parts of composite fibres, wherein a straight section of a rod (P) is bent before hardening and then the formed shape is hardened and finally cut to achieve the final form, **characterized in that**, the rod (P) section is bent by spiral coiling of it onto a rotating core (9) until the desired number of coils (P') is achieved and subsequently the formed coils (P') are hardened and after hardening are finally cut along at least one cutting line (14) which extends in parallel to the rotation axis (O) of the core (9), which makes it possible to release the formed parts from the core (9).

11. The method according to Claim 10, **characterized in that**, the rod (P) is coiled onto a core (9) and the perimeter of the core (9) cross-section, with reference to the rotation axis (O), has a shape that matches the shape of formed parts to be produced, and after hardening the formed coils (P') are cut along the cutting lines (14) defined by end points (K) of formed parts.
